# EUROPEAN PATENT SPECIFICATION

(11) **EP 2 780 379 B1**
(45) Date of publication and mention of the grant of the patent: **11.01.2017**
(21) Application number: 11788729.9
(22) Date of filing: 15.11.2011
(51) Int. Cl.: C08F 10/06, C08F 2/34

(54) **METHOD FOR POLYMERIZING POLYPROPYLENE**
VERFAHREN ZUR POLYMERISATION VON POLYPROPYLEN
PROCÉDÉ DE POLYMÉRISATION DU POLYPROPYLÈNE

(43) Date of publication of application: 24.09.2014
(73) Proprietor: W.R. Grace & CO. - CONN., Columbia, MD 21044 (US)
(72) Inventor: VAN EGMOND, Jan W., Charleston, WV 25304 (US); CAI, Ping, Lake Jackson, TX 77566 (US)
(74) Representative: Duckworth, Timothy John
(86) International application number: PCT/US2011/060758
(87) International publication number: WO 2013/074087

(56) References cited:
- WO-A1-2009/029487
- WO-A1-2011/084628
- US-A- 4 543 399
- US-A- 4 588 790

## Description

The present disclosure relates to a method for polymerizing polypropylene, optionally with one or more additional comonomers in a gas phase reactor in the presence of a mixed electron donor system comprising at least one selectivity control agent and at least one activity limiting agent. The process involves controlling the polymerization process to ensure that the difference between the reactor temperature and the dew point temperature of the incoming monomer stream is 12°C or greater.

### Background and Summary of the Invention

The production of polyolefins in gas phase reactors, such as fluidized bed reactors, requires that the heat of reaction be removed in order to maintain appropriate temperatures for the desired reaction rate. In addition, the temperature of the vessel cannot be permitted to increase to the point where the product particles become sticky and adhere to each other. The heat of reaction is commonly removed by circulating the gas from the fluidized bed to a heat exchanger outside the reactor and passing it back to the reactor. This recirculating gas is sometimes referred to as the "recycle stream" or "recycle fluid". Fresh monomer make-up may be added to the reactor separately or it may be added to the recycle stream. Thus the "recycle stream" does not necessarily comprise *only* gas which has been removed from the reactor.

The earliest such recycle systems were based on the assumption that it would be inefficient, or inoperable, to cool the recirculating gas below its dew point so that liquid would be introduced into the reactor through the recycle process. As used herein, the "dew point temperature" is that temperature at which liquid condensate begins to form in the recirculating gas. However, operation in the "condensing mode" has become quite common in the art - see Jenkins et al.'s patents US 4,543,399 and US 4,588,790. In accordance with the teachings of these patents, a gas or liquid which will not interfere with the desired polymerization reaction may be introduced into the recycle stream to increase its dew point. The resulting ability to remove greater quantities of heat energy in same or less time has increased the production capacity of the typical exothermic fluidized bed reactor.

Polypropylene reactors running in the condensing mode employing conventional Ziegler-Natta catalyst systems typically are operated such that the difference between the temperature of the fluidized bed and the dew point temperature of the recycle gas (also known as the "bed minus dew temperature") is small, typically about 1-2°C. This relatively small bed minus dew value results in an amount of liquid propylene being present in the reactor. The liquid propylene is considered advantageous as it serves to absorb heat of reaction (particularly during production spikes or production irregularities or production interruptions) and also serves to prevent reactor fouling. It is generally understood in the art that the bed minus dew temperature must be small in order to ensure that liquid propylene monomer is present in the reactor.

However, it has recently been discovered that the use of certain catalyst systems, such as those described in WO2009/029487, avoids the risk of reactor fouling independent of the presence of liquid propylene. Consequently, the bed minus dew value may be increased without any adverse impact on the reaction and/or polymer.

The increase of bed minus dew can be associated with a lower reactor total pressure and/or a higher reactor temperature.

When the reactor total pressure is relatively low, the investment and operation costs of polypropylene manufacture can be reduced. Previously, a relatively higher reactor total pressure (e.g., 450-500 psi) was always preferred, because of the need for a high monomer partial pressure to maintain a high catalyst activity. With the recently developed high activity catalysts systems, a relatively lower reactor total pressure, with a desired balance of catalyst activity and the investment/operational cost reduction, can be achieved for the purpose of minimizing manufacturing cost.

When the reactor temperature is relatively high, a few desired changes can occur accordingly, including higher catalyst activity, lower oligomer level in product (hence less volatile organic compounds (VOC) and odor), lower xylene solubles (XS), narrower molecular weight distribution, higher heat-removal driving force (hence easier to remove reaction heat), etc. In some cases, a higher reactor temperature can also help to produce product with higher melt flow rate (MFR), so to reduce or eliminate the need of energy-consuming visbreaking process needed for manufacturing high MFR products.

Despite the use of such new catalyst systems, it is still generally believed that the reactor should be operated at a bed minus dew temperature of less than 10°C in order to avoid static build-up or fouling (see examples in WO2009/029487). However, it has been discovered that gas phase reactors using these catalyst systems can be operated at bed minus dew temperatures greater than previously expected without fouling or static problems. This allows the reactor to be run at higher temperatures than previously thought possible at a given total pressure, or alternatively to run the reactor at a lower total pressure at a given reactor temperature, or both.

Accordingly in one aspect, the present invention relates to a method for polymerizing propylene, optionally with one or more additional comonomers, comprising introducing catalyst, into a gas phase reactor wherein the gas phase reactor has a given temperature. A recycle fluid comprising propylene and optionally comonomer is also introduced into the gas phase reactor, said recycle fluid having a given dew point at the inlet to the gas phase reactor. A mixed electron donor system is also introduced to the reactor, wherein the mixed electron donor system comprises at least one selectivity control agent and at least one activity limiting agent. The method is characterized by having a difference between the reactor bed temperature and the dew point temperature of the recycle fluid of 12°C, or greater.

In one aspect of the invention the reactor has a total pressure less than 375 psi (gauge). In another aspect of the invention the reactor has a reactor bed temperature higher than 72°C.

In an embodiment of the invention the recycle fluid comprises fresh and recycled propylene.

In an embodiment of the invention the recycle fluid inlet temperature is lower than the dew point of the recycle stream.

In an embodiment, the catalyst comprises one or more Ziegler-Natta procatalyst compositions comprising one or more transition metal compounds and one or more internal electron donors comprising an ester of an aromatic dicarboxylic acid; and one or more aluminum containing cocatalysts. The cocatalyst can be introduced together with the catalyst or separately.

In an embodiment, the activity limiting agent is a carboxylic acid ester, a diether, a poly(alkene glycol), a diol ester, or a combination thereof. In an embodiment the activity limiting agent is selected from a benzoate, a C₄-C₃₀ aliphatic acid ester and combinations thereof and can advantageously be selected from a laurate, a myristate, a palmitate, a stearate, an oleate or combinations thereof.

In an embodiment, the selectivity control agent is selected from the group consisting of an alkoxysilane, an amine, an ether, a carboxylate, a ketone, an amide, a carbamate, a phosphine, a phosphate, a phosphite, a sulfonate, a sulfone, a sulfoxide, and combinations thereof. In an embodiment the selectivity control agent corresponds to the formula SiRₘ(OR')₄₋ₘ, where R is C₃₋₁₂ cycloalkyl, C₃₋₁₂ branched alkyl, or C₃₋₁₂ cyclic or acyclic amino group, R' is C₁₋₄ alkyl, and m is 0, 1, or 2.

In an embodiment, the mixed external electron donor comprises three or more different electron donors.

In an embodiment, the catalyst system includes an aluminum containing cocatalyst and wherein the aluminum to mixed electron donor mole ratio is in the range of from 0.5 to 4.0:1.

In an embodiment the gas phase reactor has a superficial gas velocity in the range of from 0.2 to 1 m/s.

In an embodiment the gas phase reactor is a fluidized bed reactor.

In an embodiment the gas phase reactor includes a mechanical agitator or scraper.

The gas phase reactor can be arranged in any configuration, with vertical or horizontal configurations being preferred.

### BRIEF DESCRIPTION OF DRAWINGS

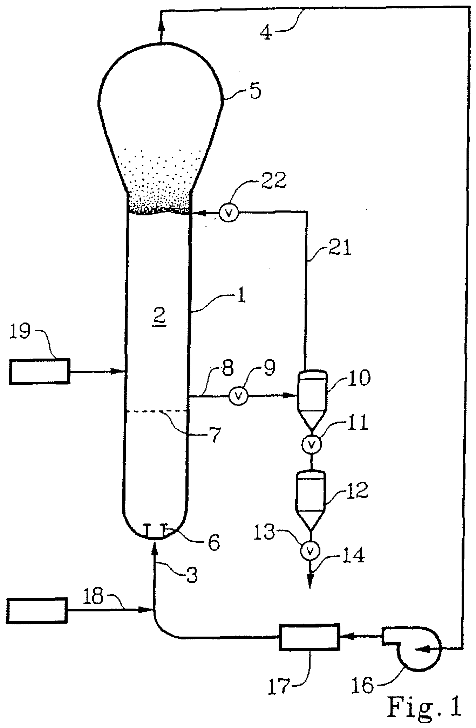

Figure 1 is a schematic of a typical fluidized bed reactor for making polyolefins.

### DETAILED DESCRIPTION OF INVENTION

The present invention relates to a method for polymerizing propylene, optionally with one or more additional comonomers, comprising introducing catalyst, into a gas phase reactor wherein the gas phase reactor has a given temperature. A recycle fluid comprising propylene and optionally comonomer is also introduced into the gas phase reactor, said recycle fluid having a given dew point at the inlet to the gas phase reactor. A mixed electron donor system is also introduced to the reactor, wherein the mixed electron donor system comprises at least one selectivity control agent and at least one activity limiting agent. The method is characterized by having a difference between the reactor temperature and the dew point temperature of the recycle fluid of 12°C, or greater.

The present invention can be more completely understood by referring to Figure 1. As seen in this Figure a typical reactor, shown more or less diagrammatically, has a straight section 1 and an expanded section 5. Within the straight section 1 is a fluidized bed 2 of particulate polyolefin product made by polymerizing monomer introduced with makeup materials through line 3 from source 18, and the introduction of catalyst from source 19, all as known in the art. Recycle line 4 more or less continuously removes fluid from expanded section 5. The fluid is passed through compressor 16 and cooler 17 to remove the thermal energy originating as the heat of reaction from the exothermal polymerization process in straight section 1. The fluid is recycled through line 3 to deflector 6 and distribution plate 7 into the fluidized bed 2, along with makeup material from source 18. Particulate product is removed continuously or intermittently through line 8, controlled by valve 9, into discharge tank 10, from which it may be removed in stages to minimize monomer loss through valve 11, tank 12 and valve 13, to recover product 14, and the monomer in the discharge tank 10 can be returned to the reactor through line 21 and valve 22, all as known in the art. Makeup material from source 18 may include not only fresh monomer, but inert liquid or other condensable materials introduced to assist in the heat removal process as is known in the art.

The gas in the recycle line 3 has a given dew point depending upon the gaseous content and pressure. In the present invention, the reactor system is operated to ensure that the reactor 1 has a fluidized bed 2 which is at a temperature which is at least 12°C higher than the dew point of the incoming recycle line 3. More preferably, the bed minus dew point is at least 14 °C. The bed minus dew point difference can be achieved by lowering the dew point of the recycle stream or increasing the temperature of the fluidized bed or a combination of both.

The present invention also requires a specific catalyst composition. The catalyst comprises a Ziegler-Natta procatalyst, a cocatalyst and a mixed electron donor system. The mixed electron donor system comprises at least one selectivity control agent (SCA) and at least one activity limiting agent (ALA).

Any conventional Ziegler-Natta procatalyst may be used in the present catalyst composition as is commonly known in the art. In an embodiment, the Ziegler-Natta procatalyst composition contains a transition metal compound and a Group 2 metal compound. The transition metal compound may be a solid complex derived from a transition metal compound, for example, titanium-, zirconium-, chromium- or vanadium-hydrocarbyloxides, hydrocarbyls, halides, or mixtures thereof.

The transition metal compound has the general formula TrXₓ where Tr is the transition metal, X is a halogen or a C₁₋₁₀ hydrocarboxyl or hydrocarbyl group, and x is the number of such X groups in the compound in combination with a Group 2 metal compound. Tr may be a Group 4, 5 or 6 metal. In an embodiment, Tr is a Group 4 metal, such as titanium. X may be chloride, bromide, C₁₋₄ alkoxide or phenoxide, or a mixture thereof. In an embodiment, X is chloride.

Nonlimiting examples of suitable transition metal compounds that may be used to form the Ziegler-Natta procatalyst composition are TiCl₄, ZrCl₄, TiBr₄, TiCl₃, Ti(OC₂H₅)₃Cl, Zr(OC₂H₅)₃Cl, Ti(OC₂H₅)₃Br, Ti(OC₃H₇)₂Cl₂,Ti(OC₆H₅)₂Cl₂, Zr(OC₂H₅)₂Cl₂, and Ti(OC₂H₅)Cl₃. Mixtures of such transition metal compounds may be used as well. No restriction on the number of transition metal compounds is made as long as at least one transition metal compound is present. In an embodiment, the transition metal compound is a titanium compound.

Nonlimiting examples of suitable Group 2 metal compounds include magnesium halides, dialkoxymagnesiums, alkoxymagnesium halides, magnesium oxyhalides, dialkylmagnesiums, magnesium oxide, magnesium hydroxide, and carboxylates of magnesium. In an embodiment, the Group 2 metal compound is magnesium dichloride.

In a further embodiment, the Ziegler-Natta procatalyst composition is a mixture of titanium moieties supported on or otherwise derived from magnesium compounds. Suitable magnesium compounds include anhydrous magnesium chloride, magnesium chloride adducts, magnesium dialkoxides or aryloxides, or carboxylated magnesium dialkoxides or aryloxides. In an embodiment, the magnesium compound is a magnesium di(C₁₋₄)alkoxide, such as diethoxymagnesium.

Nonlimiting examples of suitable titanium moieties include titanium alkoxides, titanium aryloxides, and/or titanium halides. Compounds used to prepare the Ziegler-Natta procatalyst composition include one or more magnesium-di(C₁₋₄)alkoxides, magnesium dihalides, magnesium alkoxyhalides, or mixtures thereof and one or more titanium tetra(C₁₋₄) alkoxides, titanium tetrahalides, titanium(C₁₋₄)alkoxyhalides, or mixtures thereof.

A precursor composition may be used to prepare the Ziegler-Natta procatalyst composition as is commonly known in art. The precursor composition may be prepared by the chlorination of the foregoing mixed magnesium compounds, titanium compounds, or mixtures thereof, and may involve the use of one or more compounds, referred to as "clipping agents", that aid in forming or solubilizing specific compositions via a solid/solid metathesis. Nonlimiting examples of suitable clipping agents include trialkylborates, especially triethylborate, phenolic compounds, especially cresol, and silanes.

In an embodiment, the precursor composition is a mixed magnesium/titanium compound of the formula Mg_{d}Ti(ORₑ)_{f}X_{g} wherein Rₑ is an aliphatic or aromatic hydrocarbon radical having 1 to 14 carbon atoms or COR' wherein R' is an aliphatic or aromatic hydrocarbon radical having 1 to 14 carbon atoms; each OR₃ group is the same or different; X is independently chlorine, bromine or iodine; d is 0.5 to 56, or 2-4; or 3; f is 2-116, or 5-15; and g is 0.5-116, or 1-3, or 2. The precursor may be prepared by controlled precipitation through removal of an alcohol from the reaction mixture used in its preparation. In an embodiment, the reaction medium comprises a mixture of an aromatic liquid, especially a chlorinated aromatic compound, such as chlorobenzene, with an alkanol, especially ethanol, and an inorganic chlorinating agent. Suitable inorganic chlorinating agents include chlorine derivatives of silicon, aluminum and titanium, such as titanium tetrachloride or titanium trichloride, and titanium tetrachloride in particular. The chlorinating agents lead to partial chlorination which results in a precursor containing relatively high level of alkoxy component(s). Removal of the alkanol from the solution used in the chlorination, results in precipitation of the solid precursor, having a desirable morphology and surface area. The precursor was separated from the reaction media. Moreover, the resulting precursor is particularly uniform particle sized and resistant to particle crumbling as well as degradation of the resulting procatalyst. In an embodiment, the precursor composition is Mg₃Ti(OEt)₈Cl₂.

The precursor is next converted to a solid procatalyst by further reaction (halogenation) with an inorganic halide compound, preferably a titanium halide compound, and incorporation of an internal electron donor. If not already incorporated into the precursor in sufficient quantity, the electron donor may be added separately before, during or after halogenation. This procedure may be repeated one or more times, optionally in the presence of additional additives or adjuvants, and the final solid product washed with an aliphatic solvent. Any method of making, recovering and storing the solid procatalyst is suitable for use in the present disclosure.

One suitable method for halogenation of the precursor is to react the precursor at an elevated temperature with a tetravalent titanium halide, optionally in the presence of a hydrocarbon or halohydrocarbon diluent. The preferred tetravalent titanium halide is titanium tetrachloride. The optional hydrocarbon or halohydrocarbon solvent employed in the production of olefin polymerization procatalyst preferably contains up to 12 carbon atoms inclusive, or up to 9 carbon atoms inclusive. Exemplary hydrocarbons include pentane, octane, benzene, toluene, xylene, alkylbenzenes, and decahydronaphthalene. Exemplary aliphatic halohydrocarbons include methylene chloride, methylene bromide, chloroform, carbon tetrachloride, 1,2-dibromoethane, 1,1,2-trichloroethane, trichlorocyclohexane, dichlorofluoromethane and tetrachlorooctane. Exemplary aromatic halohydrocarbons include chlorobenzene, bromobenzene, dichlorobenzenes and chlorotoluenes. The aliphatic halohydrocarbon may be a compound containing at least two chloride substituents such as carbon tetrachloride or 1,1,2-trichloroethane. The aromatic halohydrocarbon may be chlorobenzene or o-chlorotoluene.

The halogenation may be repeated one or more times, optionally accompanied by washing with an inert liquid such as an aliphatic or aromatic hydrocarbon or halohydrocarbon between halogenations and following halogenation. Further optionally one or more extractions involving contacting with an inert liquid diluent, especially an aliphatic or aromatic hydrocarbon, or aliphatic or aromatic halohydrocarbon, especially at an elevated temperature greater than 100°C, or greater than 110°C, may be employed to remove labile species, especially TiCl₄.

In an embodiment, the Ziegler-Natta procatalyst composition includes a solid catalyst component obtained by (i) suspending a dialkoxy magnesium in an aromatic hydrocarbon or halohydrocarbon that is liquid at normal temperatures, (ii) contacting the dialkoxy magnesium with a titanium halide and further (iii) contacting the resulting composition a second time with the titanium halide, and contacting the dialkoxy magnesium with a diester of an aromatic dicarboxylic acid at some point during the treatment with the titanium halide in (ii).

In an embodiment, the Ziegler-Natta procatalyst composition includes a solid catalyst component obtained by (i) suspending a precursor material of the formula Mg_{d}Ti(ORₑ)_{f}X_{g} (as described previously) in an aromatic hydrocarbon or halohydrocarbon that is liquid at normal temperatures, (ii) contacting the precursor with a titanium halide and further (iii) contacting the resulting composition a second time with the titanium halide, and contacting the precursor with a diester of an aromatic dicarboxylic acid at some point during the treatment with the titanium halide in (ii).

The Ziegler-Natta procatalyst composition includes an internal electron donor. The internal electron donor provides tacticity control and catalyst crystallite sizing. Nonlimiting examples of suitable internal electron donors include aromatic dicarboxylic acid esters, halides or anhydrides or (poly)alkyl ether derivatives thereof, especially C₁₋₄ dialkyl esters of phthalic or terephthalic acid, phthaloyl dichloride, phthalic anhydride, and C₁₋₄ (poly)alkyl ether derivatives thereof. In an embodiment, the internal electron donor is diisobutyl phthalate or di-n-butyl phthalate.

The Ziegler-Natta procatalyst composition may also include an inert support material. The support may be an inert solid which does not adversely alter the catalytic performance of the transition metal compound. Examples include metal oxides, such as alumina, and metalloid oxides, such as silica.

The cocatalyst for use with the foregoing Ziegler-Natta procatalyst composition is an aluminum containing composition. Nonlimiting examples of suitable aluminum containing compositions include organoaluminum compounds, such as trialkylaluminum-, dialkylaluminum hydride-, alkylaluminum dihydride-, dialkylaluminum halide-, alkylaluminumdihalide-, dialkylaluminum alkoxide-, and alkylaluminum dialkoxide- compounds containing from 1-10, or 1-6 carbon atoms in each alkyl- or alkoxide- group. In an embodiment, the cocatalyst is a C₁₋₄ trialkylaluminum compound, such as triethylaluminum (TEAL). The molar ratio of aluminum to titanium of from 35:1 to 50:1. In an embodiment, the molar ratio of aluminum to titanium to 45:1.

The method of the present invention also involves introducing a mixed electron donor system to the reactor. The mixed electron donor system is a mixture of (i) one or more activity limiting agents (ALA) and/or (ii) one or more silane compositions as a selectivity control agent (SCA). In an embodiment, the ALA is an aliphatic ester. The aliphatic ester may be a C₄-C₃₀aliphatic acid ester, may be a mono- or a poly- (two or more) ester, may be straight chain or branched, may be saturated or unsaturated, and any combination thereof. The C₄-C₃₀ aliphatic acid ester may also be substituted with one or more Group 14, 15 or 16 heteroatom containing substituents. Nonlimiting examples of suitable C₄-C₃₀ aliphatic acid esters include C₁₋₂₀ alkyl esters of aliphatic C₄₋₃₀ monocarboxylic acids, C₁₋₂₀ alkyl esters of aliphatic C₈₋₂₀ monocarboxylic acids, C₁₋₄ allyl mono- and diesters of aliphatic C₄₋₂₀ monocarboxylic acids and dicarboxylic acids, C₁₋₄ alkyl esters of aliphatic C₈₋₂₀ monocarboxylic acids and dicarboxylic acids, and C₄₋₂₀ alkyl mono- or polycarboxylate derivatives of C₂₋₁₀₀ (poly)glycols or C₂₋₁₀₀ (poly)glycol ethers. In a further embodiment, the C₄₋C₃₀ aliphatic acid ester may be isopropyl myristate, di-n-butyl sebacate, (poly)(alkylene glycol) mono- or diacetates, (poly)(alkylene glycol) mono- or di-myristates, (poly)(alkylene glycol) mono- or di-laurates, (poly)(alkylene glycol) mono- or di- oleates, glyceryl tri(acetate), glyceryl tri-ester of C₂₋₄₀ aliphatic carboxylic acids, and mixtures thereof. In a further embodiment, the C₄-C₃₀aliphatic ester is isopropyl myristate or di-n-butyl sebacate.

In an embodiment the ALA is a non-ester composition. As used herein, a "non-ester composition" is an atom, molecule, or compound that is free of an ester functional group. In other words, the "non-ester composition" does not contain the following functional group.

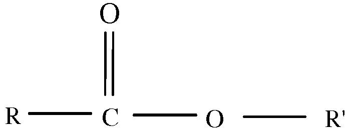

In an embodiment, the non-ester composition may be a dialkyl diether compound or an amine compound. The dialkyl diether compound is represented by the following formula, 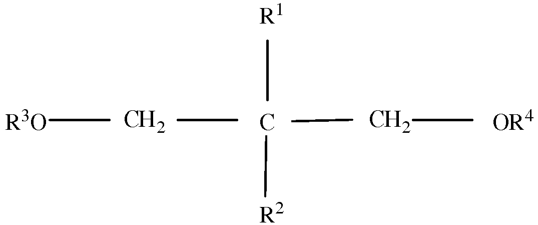 wherein R¹ to R⁴ are independently of one another an alkyl, aryl or aralkyl group having up to 20 carbon atoms, which may optionally contain a group 14, 15, 16, or 17 heteroatom, provided that R¹ and R² may be a hydrogen atom. Nonlimiting examples of suitable dialkyl ether compounds include dimethyl ether, diethyl ether, dibutyl ether, methyl ethyl ether, methyl butyl ether, methyl cyclohexyl ether, 2,2-dimethyl-1,3-dimethoxypropane, 2,2-diethyl-1,3-dimethoxypropane, 2,2-di-n-butyl-1,3-dimethoxypropane, 2,2-diisobutyl-1,3-dimethoxypropane, 2-ethyl-2-n-butyl-1,3-dimethoxypropane, 2-n-propyl-2-cyclopentyl-1,3-dimethoxypropane, 2,2-dimethyl-1,3-diethoxypropane, 2-isopropyl-2-isobutyl-1,3-dimethoxypropane, 2,2-dicyclopentyl-1,3-dimethoxypropane, 2-n-propyl-2-cyclohexyl-1,3-diethoxypropane, and 9,9-bis(methoxymethyl)fluorene. In a further embodiment, the dialkyl ether compound is 2,2-diisobutyl-1,3-dimethoxypropane.

In an embodiment, the non-ester composition is an amine compound. Nonlimiting examples of suitable amine compounds include 2,6-substituted piperidines such as 2,6-dimethylpiperidine and 2,2,6,6-tetramethylpiperidine and 2,5-substituted piperidines. In a further embodiment, the piperidine compound is 2,2,6,6-tetramethylpiperidine.

For ALA that contains more than one carboxylate groups, all the carboxylate groups are considered effective components. For example, a sebacate molecule contains two carboxylate functional groups is considered to have two effective functional molecules.

The SCA includes a silane composition. The silane composition may include one or more alkoxysilanes having the general formula: SiRₘ(OR')₄₋ₘ (I) where R independently each occurrence is hydrogen or a hydrocarbyl or an amino group optionally substituted with one or more substituents containing one or more Group 14, 15, 16, or 17 heteroatoms R contains up to 20 atoms not counting hydrogen and halogen R' is a C₁₋₂₀ alkyl group, and m is 0, 1, 2 or 3. In an embodiment, R is C₆₋₁₂ aryl, alkyl or aralkyl, C₃₋₁₂ cycloallyl, C₃₋₁₂ branched alkyl, or C₃₋₁₂ cyclic amino group, R' is C₁₋₄ allyl, and m is 1 or 2. Nonlimiting examples of suitable silane compositions include dicyclopentyldimethoxysilane, di-tert-butyldimethoxysilane, methylcyclohexyldimethoxysilane, methylcyclohexyldiethoxysilane, di-n-butyldimethoxysilane, ethylcyclohexyldimethoxysilane, diphenyldimethoxysilane, diisopropyldimethoxysilane, di-n-propyldimethoxysilane, diisobutyldimethoxysilane, diisobutyldiethoxysilane, di-n-butyldimethoxysilane, cyclopentyltrimethoxysilane, isopropyltrimethoxysilane, n-propyltrimethoxysilane, n-propyltriethoxysilane, ethyltriethoxysilane, tetramethoxysilane, tetraethoxysilane, cyclopentylpyrrolidinodimethoxysilane, bis(pyrrolidino)dimethoxysilane, bis(perhydroisoquinolino)dimethoxysilane, and dimethyldimethoxysilane. In an embodiment, the silane composition may be dicyclopentyldimethoxysilane, methylcyclohexyldimethoxysilane, or n-propyltrimethoxysilane, and any combination of thereof. In a further embodiment, the silane composition is dicyclopentyldimethoxysilane.

In some embodiments the mixed external electron donor may comprise three or more external electron donors.

Broader molecular weight distribution (MWD) can be achieved using a blend of 2 silanes that exhibit different melt flow rates when used alone. By incorporating an ALA into the SCA compositions while controlling low Al/SCA ratio, a catalyst composition that leads to broad MWD while greatly reducing the tendency of reactor fouling can be obtained. Such composition include mixtures of at least 2 alkoxysilanes wherein one of the alkoxysilane yield polymer with a melt flow rate at least twice as high as the another polymer formed under the same polymerization condition and an ALA selected from a carboxylic acid ester or a non-ester composition as described previously. The carboxylic acid ester ALA may be an ester of an aromatic carboxylic acid or a derivative thereof, an aliphatic ester, or a non-ester composition. Nonlimiting examples of suitable aromatic carboxylic acids include C₁₋₁₀ alkyl or cycloalkyl esters of aromatic monocarboxylic acids. Suitable substituted derivatives thereof include compounds substituted both on the aromatic ring(s) or the ester group with one or more substituents containing one or more Group 14, 15 or 16 heteroatoms, especially oxygen. Examples of such substituents include (poly)alkylether, cycloalkylether, arylether, aralkylether, alkylthioether, arylthioether, dialkylamine, diarylamine, diaralkylamine, and trialkylsilane groups. The aromatic carboxylic acid ester may be a C₁₋₂₀ hydrocarbyl ester of benzoic acid wherein the hydrocarbyl group is unsubstituted or substituted with one or more Group 14, 15 or 16 heteroatom containing substituents and C₁₋₂₀ (poly)hydrocarbyl ether derivatives thereof, or C₁₋₄ alkyl benzoates and C₁₋₄ ring alkylated derivatives thereof, or methyl benzoate, ethyl benzoate, propyl benzoate, methyl p-methoxybenzoate, methyl p-ethoxybenzoate, ethyl p-methoxybenzoate, and ethyl p-ethoxybenzoate.

In an embodiment, the aromatic monocarboxylic acid is ethyl p-ethoxybenzoate. In an alternative embodiment, the ALA is an aliphatic ester. The aliphatic ester may be a C₄-C₃₀aliphatic acid ester, may be a mono- or a poly-(two or more) ester, may be straight chain or branched, may be saturated or unsaturated, and any combination thereof. The C₄-C₃₀aliphatic acid ester may also be substituted with one or more Group 14, 15 or 16 heteroatom containing substituents. Nonlimiting examples of suitable C₄₋C₃₀ aliphatic acid esters include C₁₋₂₀ alkyl esters of aliphatic C₄₋₃₀ monocarboxylic acids, C₁₋₂₀ alkyl esters of aliphatic C₈₋₂₀ monocarboxylic acids, C₁₋₄ allyl mono- and diesters of aliphatic C₄₋₂₀ monocarboxylic acids and dicarboxylic acids, C₁₋₄ alkyl esters of aliphatic C₈₋₂₀ monocarboxylic acids and dicarboxylic acids, and C₄₋₂₀ mono- or polycarboxylate derivatives of C₂₋₁₀₀ (poly)glycols or C₂₋₁₀₀ (poly)glycol ethers. In a further embodiment, the C₄₋C₃₀ aliphatic acid ester may be isopropyl myristate, di-n-butyl sebacate, (poly)(alkylene glycol) mono- or diacetates, (poly)(alkylene glycol) mono- or di-myristates, (poly)(alkylene glycol) mono- or di-laurates, (poly)(alkylene glycol) mono- or di- oleates, glyceryl tri(acetate), glyceryl tri-ester of C₂₋₄₀ aliphatic carboxylic acids, and mixtures thereof. In a further embodiment, the C₄₋C₃₀ aliphatic ester is isopropyl myristate or di-n-butyl sebacate.

In an embodiment, one of the alkoxysilanes in the mixtures is dicyclopentyldimethoxysilane or diisopropyldimethoxysilane while the other alkoxysilane is selected from ethyltriethoxysilane, n-propyltriethoxysilane, diisobutyldiethoxysilane, methylcyclohexyldiethoxysilane, di-n-butyldimethoxysilane, tetraethoxysilane, and tetramethoxysilane.

In an embodiment, the molar ratio of aluminum to total SCA is from 0.5:1 to 4:1 (or any value therebetween), or from 1:1 to 3:1, or from 2:1 to 3:1 or less than or equal to 2.5:1. As used herein, the "total SCA" is meant to include all external electron donors and thus is the combined amount of the ALA (if present) and the silane composition and the non-ester composition (if present) present in the catalyst composition. In an embodiment, the molar ratio of aluminum to total SCA is 2.5:1. In a further embodiment, the ALA is an alkyl ester of C₄-C₃₀ aliphatic acid or a non-ester composition.

In an embodiment, the molar ratio of aluminum to total SCA is from 0.5:1 to 50:1, or from 0.75:1 to 30:1, or 1:1 to 20:1 when (poly)(alkylene glycol) ester of C₄-C₃₀ aliphatic acid is the ALA.

The catalyst, cocatalyst, and mixed electron donor can be introduced to the reactor together or separately, as is generally known in the art.

As will be readily understood by those of ordinary skill in the art, there are several ways of controlling the reactor process to ensure a bed minus dew temperature of 12°C or more. As the dew point of the recycle fluid is a function of pressure, one way to increase the bed minus dew point difference is to operate the reactor at a lower pressure. Thus in some embodiments the reactor is operated at a total pressure of less than 375 psi (gauge), more preferably less than 350 psi (gauge).

Another way to increase the difference between the bed temperature and the dew point of the recycle stream is to operate the reactor at a higher temperature. Thus in some embodiments, the reactor has a reactor temperature higher than 70°C, more preferably higher than 72°C.

Another way to increase the difference between the bed temperature and the dew point of the recycle stream is to add condensing agents to the recycle fluid in order to lower its dew point. Propylene monomer may be used as a condensing agent as well as a raw material when polypropylene is being manufactured. Polypropylene homopolymers can be so prepared as well as copolymers with other comonomers, such as for example, random copolymers of ethylene-propylene and/or butene-propylene. Alternative condensing agents may be added to the polypropylene process, non-limiting examples of which include propane, butane, pentane, isopentane and hexane. These agents may be used in the production of homopolymers or random copolymers. The condensing agents can be added at levels to facilitate condensing, preferably in the range of 5 to 90 wt. percent condensing. There may be upper limitations on liquid content that are product dependent. For example, inherently less crystalline resins such as propylene-butene copolymer will typically tolerate higher levels of C3 as opposed to C4 or C5 condensing agents. Isopentane, for example, tends to dissolve into propylene-butene copolymer resin and soften it and is therefore less useful for condensing. Propane, on the other hand, although added in great quantity, does not greatly dissolve and soften the propylene-butene copolymer resin and is therefore an excellent tool for lowering the dew point of the recycle fluid.

Our preferred ranges of various inert condensing agents are about:
Propane 5 to 90 mole percent, preferably 10 to 85 mole percent;
Butane 5 to 90 mole percent, preferably 10 to 75 mole percent;
Isopentane 1 to 90 mole percent, preferably 5-70 mole percent;
Hexane 1 to 90 mole percent, preferably 3 to 65 mole percent.

As is known in the art, two or more condensing agents may be used together. As an example, isopentane may be added at a level that does not cause undue resin stickiness, and propane may be added to further increase the amount of condensing as well as to increase the heat capacity of the cycle gas. Propane may prevent resin agglomeration in the fluid bed in regions not penetrated by liquid. Propane may also aid in the removal of heavier hydrocarbons during the resin degassing process after product removal.

The method of introducing the condensing agent may vary. For example, it may be introduced as a gas or a liquid, together with the monomer or a comonomer, through line 3 or a separate line to distribution plate 7, alone or together with other additives for the process such as inert solids, hydrogen, catalyst and/or cocatalyst. Thus it should be readily understood that the recycle stream may include both fresh and recycled propylene.

The recycled fluid may also be introduced directly into the fluidized bed 2 through the wall of straight section 1 or by means of a conduit passing directly through distributor plate 7 (see US Patent 5,804,677). It may be divided or split into two or more streams having the same or differing ratios of liquid to gas.

The method of cooling, condensing and reintroducing the recycle stream to the fluid bed may vary. Multiple or single heat exchange coolers in the recirculation line may be used in series or parallel. Water may be used as the cooling medium, and refrigeration can be employed to increase the amount of cooling. The blower that recirculates the recycle stream around the loop may be located before, after or in between the coolers. The partially condensed recycle stream may be split into two parts, one containing mainly liquid and one containing mainly gas, and the two streams introduced separately into the fluid bed. The separate gas or liquid streams may be further heated, cooled, compressed, pumped or condensed prior to reintroduction to the fluid bed as is known in the art. The liquid can be sprayed into the reactor using an assist gas that may be the cycle gas. The polymerization catalyst can be added to the reactor with the condensed liquid recycle stream introduced separately into the fluidized bed while operation under the turbulent fluidization regime with the advantage that the catalyst is better dispersed and localized hot spotting of the catalyst is reduced relative to such operation under the bubbling fluidization regime.

In some embodiments it may be advantageous to keep the recycle fluid at the inlet to the reactor at a temperature which is lower than the dew point of the reactor fluid.

The reactor itself may be any gas phase reactor known in the art. In a preferred embodiment the reactor is a fluidized bed reactor such as depicted in Figure 1. If a fluidized bed reactor is used, it may be advantageous to operate the reactor such that it has a superficial gas velocity in the range of from 0.2 to 1 m/s. The reactor can also include a mechanical agitator or scraper.

The reactor can be arranged horizontally or vertically or in other arrangements, as is generally known in the art.

### EXAMPLES

The following Examples were run to demonstrate the advantages in terms of catalyst consumption and pressure reduction obtainable by using the method of the present invention in two different catalyst systems.

| Example | Comp. A | A1 | A2 | Comp. B | B1 | B2 |
|---|---|---|---|---|---|---|
| Catalyst | Z-N (see US 5,317,036) | | | Z-N (see US 5,604,172) | | |
| Donor | 95% DBS (di-n-butyl sebacate) + 5% "C Donor" (methylcyclohexyldimethoxysilane) | | | | | |
| Reactor | Gas-Phase Fluidized-Bed Unipol Reactor, 18.25 ft diameter, 65 ft straight section height | | | | | |
| Product | Polypropylene Homopolymer | | | Random Ethylene-Propylene Copolymer | | |
| Production Rate (Ton/hr) | 50 | | | 50 | | |
| Reactor T(°C) | 72 | 72 | 72 | 65 | 72 | 72 |
| Reactor P (psig) | 490 | 375 | 300 | 450 | 375 | 300 |

| Gas Composition (mol%) | | | | | | |
|---|---|---|---|---|---|---|
| propylene | 77.23 | 80.77 | 79.37 | 66.13 | 78.85 | 79.37 |
| hydrogen | 0.31 | 0.32 | 0.32 | 0.26 | 0.31 | 0.31 |
| propane | 9.61 | 12.69 | 13.61 | 13.51 | 12.62 | 13.28 |
| nitrogen | 12.85 | 6.22 | 6.7 | 19.08 | 7.01 | 5.83 |
| ethylene | 0 | 0 | 0 | 1.01 | 1.21 | 1.22 |
| Dew Point (°C) | 64.7 | 58.7 | 48.6 | 55.6 | 57.4 | 48.6 |
| Bed - Dew (°C) | 7.3 | 13.3 | 23.4 | 9.4 | 14.6 | 23.4 |
| Residence Time (hr) | 1.0 | 1.95 | 2.00 | 1.09 | 2.11 | 2.15 |
| Catalyst consumption* | 100% | 75.4% | 86.0% | 100% | 68.9% | 75.0% |

Additional advantages obtainable through the use of the present invention include the ability to produce products having narrower molecular weight distribution, higher isotacticity, lower oligomer content, and the possibility of reducing or avoiding product visbreaking.

It should be understood that various changes and modifications to the presently preferred embodiments described herein will be apparent to those skilled in the art. Such changes and modifications can be made without departing from the spirit and scope of the present disclosure and without diminishing its intended advantages. It is therefore intended that such changes and modifications be covered by the appended claims.

## Claims

1. A method for polymerizing propylene, optionally with one or more additional comonomers, comprising:
a. introducing catalyst into a gas phase reactor wherein the gas phase reactor has a given temperature;
b. introducing a recycle fluid comprising propylene and optionally comonomer into the gas phase reactor, said recycle fluid having a given dew point at the inlet to the gas phase reactor;
c. introducing a mixed electron donor system into the gas phase reactor, wherein the mixed electron donor system comprises at least one selectivity control agent and at least one activity limiting agent; and
d. introducing propylene, optionally with one or more additional comonomers into the gas phase reactor;
wherein the method is **characterized by** having a difference between the reactor temperature and the dew point temperature of the recycle fluid of 12°C, or greater.

2. The method of claim 1 wherein the reactor has a total pressure less than 375 psi.

3. The method of claim 1 wherein the reactor has a reactor temperature higher than 72°C.

4. The method of claim 1 wherein the recycle fluid comprises fresh and recycled propylene.

5. The method of claim 1 wherein the recycle fluid inlet temperature is lower than the dew point.

6. The method of claim 1 wherein cocatalyst is introduced together with the catalyst.

7. The method of claim 1 wherein the catalyst comprises one or more Ziegler-Natta procatalyst compositions comprising one or more transition metal compounds and one or more esters of aromatic dicarboxylic acid internal electron donors; and one or more aluminum containing cocatalysts.

8. The process of claim 1 wherein the activity limiting agent:
(a) is a carboxylic acid ester, a diether, a poly(alkene glycol), a diol ester, or a combination thereof; or
(b) is selected from a benzoate, a C₄-C₃₀ aliphatic acid ester and combinations thereof; or
(c) is selected from a laurate, a myristate, a palmitate, a stearate, an oleate or combinations thereof.

9. The process of claim 1 wherein the selectivity control agent:
(a) is selected from the group consisting of an alkoxysilane, an amine, an ether, a carboxylate, a ketone, an amide, a carbamate, a phosphine, a phosphate, a phosphite, a sulfonate, a sulfone, a sulfoxide, and combinations thereof; or
(b) corresponds to the formula SiRₘ(OR')₄₋ₘ, where R is C₃₋₁₂ cycloalkyl, C₃₋₁₂ branched alkyl, or C₃₋₁₂ cyclic or acyclic amino group, R' is C₁₋₄ alkyl, and m is 0, 1, or 2.

10. The process of claim 9 wherein the selectivity control agent is selected from dicyclopentyldimethoxysilane, di-tert-butyldimethoxysilane, methylcyclohexyldimethoxysilane, methylcyclohexyldiethoxysilane, ethylcyclohexyldimethoxysilane, diphenyldimethoxysilane, diisopropyldimethoxysilane, di-n-propyldimethoxysilane, diisobutyldimethoxysilane, diisobutyldiethoxysilane, isobutylisopropyldimethoxysilane, di-n-butyldimethoxysilane, cyclopentyltrimethoxysilane, isopropyltrimethoxysilane, n-propyltrimethoxysilane, n-propyltriethoxysilane, ethyltriethoxysilane, tetramethoxysilane, tetraethoxysilane, diethylaminotriethoxysilane, cyclopentylpyrrolidinodimethoxysilane, bis(pyrrolidino)dimethoxysilane, bis(perhydroisoquinolino)dimethoxysilane, and dimethyldimethoxysilane.

11. The process of claim 1 wherein the mixed electron donor system is selected from the group consisting of: dicyclopentyldimethoxysilane and isopropyl myristate; diisopropyldimethoxysilane and isopropyl myristate; dicyclopentyldimethoxysilane and poly(ethylene glycol) laurate; dicyclopentyldimethoxysilane, isopropyl myristate and poly(ethylene glycol) dioleate; methylcyclohexyldimethoxysilane and isopropyl myristate; n-propyltrimethoxysilane and isopropyl myristate; dimethyldimethoxysilane, methylcyclohexyldimethoxysilane and isopropyl myristate; dicyclopentyldimethoxysilane and n-propyltriethoxysilane and isopropyl myristate; diisopropyldimethoxysilane, n-propyltriethoxysilane and isopropyl myristate; dicyclopentyldimethoxysilane, tetraethoxysilane and isopropyl myristate; dicyclopentyldimethoxysilane, diisopropyldimethoxysilane, n-propyltriethoxysilane and isopropyl myristate; and combinations thereof.

12. The process of claim 1 wherein the mixed electron donor system comprises three or more different electron donors.

13. The process of claim 1 wherein the catalyst system includes an aluminum containing cocatalyst and wherein the aluminum to mixed electron donor mole ratio is in the range of from 0.5 to 4.0:1.

14. The process of claim 1 wherein the gas phase reactor is selected from the group consisting of:
(a) a fluidized bed reactor;
(b) a reactor having a superficial gas velocity in the range of from 0.2 to 1 m/s;
(c) a reactor including a mechanical agitator or scraper; and
(d) combinations thereof.

15. The process of claim 1 wherein the reactor produces homopolymer polypropylene or a random copolymer polypropylene with one or more co-monomers.

## Patentansprüche

1. Verfahren zum Polymerisieren von Propylen, gegebenenfalls mit einem oder mehreren zusätzlichen Comonomeren, bei dem
a. ein Katalysator in einen Gasphasenreaktor gegeben wird, wobei der Gasphasenreaktor eine bestimmte Temperatur aufweist,
b. ein Umlauffluid, das Propylen und gegebenenfalls ein Comonomer umfasst, in den Gasphasenreaktor gegeben wird, wobei das Umlauffluid an dem Einlass zu dem Gasphasenreaktor einen bestimmten Taupunkt aufweist,
c. ein gemischtes Elektronendonorsystem in den Gasphasenreaktor gegeben wird, wobei das gemischte Elektronendonorsystem mindestens ein Selektivitätssteuerungsmittel und mindestens ein aktivitätslimitierendes Mittel aufweist, und
d. Propylen, gegebenenfalls mit einem oder mehreren zusätzlichen Comonomeren, in den Gasphasenreaktor gegeben wird,
wobei das Verfahren **dadurch gekennzeichnet ist, dass** es eine Differenz zwischen der Reaktortemperatur und der Taupunkttemperatur des Umlauffluids von 12°C oder mehr aufweist.

2. Verfahren nach Anspruch 1, wobei der Reaktor einen Gesamtdruck von weniger als 375 psi aufweist.

3. Verfahren nach Anspruch 1, wobei der Reaktor eine Reaktortemperatur von mehr als 72°C aufweist.

4. Verfahren nach Anspruch 1, wobei das Umlauffluid frisches und rückgeführtes Propylen umfasst.

5. Verfahren nach Anspruch 1, wobei die Einlasstemperatur des Umlauffluids geringer als der Taupunkt ist.

6. Verfahren nach Anspruch 1, wobei der Cokatalysator zusammen mit dem Katalysator hinzugegeben wird.

7. Verfahren nach Anspruch 1, wobei der Katalysator eine oder mehrere Ziegler-Natta-Prokatalysatorzusammensetzungen, die eine oder mehrere Übergangsmetallverbindungen und einen oder mehrere Ester von internen Elektronendonoren aromatischer Dicarboxylsäure umfasst, und einen oder mehrere Aluminium enthaltende Cokatalysatoren umfasst.

8. Verfahren nach Anspruch 1, wobei das aktivitätslimitierende Mittel
(a) ein Carboxylsäureester, ein Diether, ein Polyalkenglycol, ein Diolester oder eine Kombination davon ist oder
(b) aus einem Benzoat, einem aliphatischen C₄-C₃₀-Säureester und Kombinationen davon ausgewählt ist oder
(c) aus einem Laurat, einem Myristat, einem Palmitat, einem Stearat, einem Oleat oder Kombinationen davon ausgewählt ist.

9. Verfahren nach Anspruch 1, wobei das Selektivitätssteuerungsmittel
(a) aus der Gruppe bestehend aus einem Alkoxysilan, einem Amin, einem Ether, einem Carboxylat, einem Keton, einem Amid, einem Carbamat, einem Phosphin, einem Phosphat, einem Phosphit, einem Sulfonat, einem Sulfon, einem Sulfoxid und Kombinationen davon ausgewählt ist, oder
(b) der Formel SiRₘ (OR') ₄₋ₘ entspricht, in der R ein C₃₋₁₂-Cycloalkyl, ein verzweigtes C₃₋₁₂-Alkyl oder eine cyclische oder acyclische C₃₋₁₂-Aminogruppe ist, R' ein C₁₋₄-Alkyl ist und m 0, 1 oder 2 ist.

10. Verfahren nach Anspruch 9, wobei das Selektivitätssteuerungsmittel aus Dicyclopentyldimethoxysilan, Di-tert-butyldimethoxysilan, Methylcyclohexyldimethoxysilan, Methylcyclohexyldiethoxysilan, Ethylcyclohexyldimethoxysilan, Diphenyldimethoxysilane, Diisopropyldimethoxysilan, Di-n-propyldimethoxysilan, Diisobutyldimethoxysilane, Diisobutyldiethoxysilane, Isobutylisopropyldimethoxysilan, Di-n-butyldimethoxysilan, Cyclopentyltrimethoxysilan, Isopropyltrimethoxysilan, n-Propyltrimethoxysilan, n-Propyltriethoxysilan, Ethyltriethoxysilan, Tetramethoxysilan, Tetraethoxysilan, Diethylaminotriethoxysilan, Cyclopentylpyrrolidinodimethoxysilan, Bis(pyrrolidino)dimethoxysilan, Bis(perhydroisochinolino)dimethoxysilan und Dimethyldimethoxysilan ausgewählt ist.

11. Verfahren nach Anspruch 1, wobei das gemischte Elektronendonorsystem aus der Gruppe bestehend aus Dicyclopentyldimethoxysilan und Isopropylmyristat; Diisopropyldimethoxysilan und Isopropylmyristat; Dicyclopentyldimethoxysilan und Polyethyleneglycollaurat; Dicyclopentyldimethoxysilan, Isopropylmyristat und Polyethyleneglycoldioleat; Methylcyclohexyldimethoxysilan und Isopropylmyristat; n-Propyltrimethoxysilan und Isopropylmyristate; Dimethyldimethoxysilan, Methylcyclohexyldimethoxysilan und Isopropylmyristate; Dicyclopentyldimethoxysilan und n-Propyltriethoxysilan und Isopropylmyristat; Diisopropyldimethoxysilane, n-Propyltriethoxysilan und Isopropylmyristat; Dicyclopentyldimethoxysilan, Tetraethoxysilane und Isopropylmyristat; Dicyclopentyldimethoxysilan, Diisopropyldimethoxysilan, n-Propyltriethoxysilan und Isopropylmyristat und Kombinationen davon ausgewählt ist.

12. Verfahren nach Anspruch 1, wobei das gemischte Elektronendonorsystem drei oder mehr verschiedene Elektronendonoren umfasst.

13. Verfahren nach Anspruch 1, wobei das Katalysatorsystem einen Aluminium enthaltenden Cokatalysator aufweist und wobei das Molverhältnis von Aluminium zum gemischten Elektronendonor im Bereich von 0,5 bis 4,0:1 liegt.

14. Verfahren nach Anspruch 1, wobei der Gasphasenreaktor aus der Gruppe bestehend aus
(a) einem Wirbelschichtreaktor,
(b) einem Reaktor, der eine Gasleerrohrgeschwindigkeit im Bereich von 0,2 bis 1 m/s aufweist,
(c) einem Reaktor, der einen mechanischen Rührer oder Schaber aufweist, und
(d) Kombinationen davon
ausgewählt ist.

15. Verfahren nach Anspruch 1, wobei der Reaktor Polypropylen-Homopolymer oder ein statistisches Polypropylen-Copolymer mit einem oder mehreren Comonomeren erzeugt.

## Revendications

1. Procédé de polymérisation du propylène, facultativement avec un ou plusieurs autres comonomères, comprenant :
a. l'introduction d'un catalyseur dans un réacteur en phase gazeuse, dans lequel le réacteur en phase gazeuse a une température donnée ;
b. l'introduction d'un fluide de recyclage comprenant du propylène, et facultativement un comonomère, dans le réacteur en phase gazeuse, ledit fluide de recyclage ayant un point de rosée donné à l'entrée du réacteur en phase gazeuse ;
c. l'introduction d'un système donneur d'électrons mixte dans le réacteur en phase gazeuse, dans lequel le système donneur d'électrons mixte comprend au moins un agent de commande de sélectivité et au moins un agent de limitation d'activité ; et
d. l'introduction de propylène, facultativement avec un ou plusieurs comonomères, dans le réacteur en phase gazeuse ;
dans lequel le procédé est **caractérisé en ce qu'**il présente une différence entre la température de réacteur et la température de point de rosée du fluide de recyclage de 12°C, ou plus.

2. Procédé selon la revendication 1, dans lequel le réacteur a une pression totale inférieure à 375 livres par pouce carré (psi).

3. Procédé selon la revendication 1, dans lequel le réacteur a une température du réacteur supérieure à 72°C.

4. Procédé selon la revendication 1, dans lequel le fluide de recyclage comprend du propylène frais et recyclé.

5. Procédé selon la revendication 1, dans lequel la température d'entrée de fluide de recyclage est inférieure au point de rosée.

6. Procédé selon la revendication 1, dans lequel le co-catalyseur est introduit conjointement avec le catalyseur.

7. Procédé selon la revendication 1, dans lequel le catalyseur comprend une ou plusieurs compositions de procatalyseur de Ziegler-Natta comprenant un ou plusieurs composés de métaux de transition et un ou plusieurs esters aromatiques de donneurs d'électrons internes d'acide dicarboxylique; et un ou plusieurs co-catalyseurs contenant de l'aluminium.

8. Procédé suivant la revendication 1, dans lequel l'agent de limitation d'activité :
(a) est un ester d'acide carboxylique, un diéther, un poly(alcène-glycol), un ester de diol ou une combinaison de ceux-ci ; ou
(b) est choisi parmi un benzoate, un ester d'acide aliphatique en C₄-C₃₀, et des combinaisons de ceux-ci ; ou
(c) est choisi parmi un laurate, un myristate, un palmitate, un stéarate, un oléate ou des combinaisons de ceux-ci

9. Procédé selon la revendication 1, dans lequel l'agent de commande de sélectivité :
(a) est choisi dans le groupe constitué par un alcoxysilane, une amine, un éther, un carboxylate, une cétone, un amide, un carbamate, une phosphine, un phosphate, un phosphite, un sulfonate, une sulfone, un sulfoxyde, et des combinaisons de ceux-ci ; ou
(b) correspond à la formule SiRₘ(OR')_{4-m,} où R est un groupe cycloalkyle en C₃₋₁₂, alkyle ramifié en C₃₋₁₂, ou un groupe amino cyclique ou acyclique en C₃₋₁₂, R' est un groupe alkyle en C₁₋₄, et m est 0, 1 ou 2.

10. Procédé selon la revendication 9, dans lequel l'agent de commande de sélectivité est choisi parmi dicyclopentyldiméthoxysilane, di-tert-butyldiméthoxysilane, méthylcyclohexyldiméthoxysilane, méthylcyclohexyldiéthoxysilane, éthylcyclohexyldiméthoxysilane, diphényldiméthoxysilane, diisopropyldiméthoxysilane,di-n-propyldiméthoxysilane, diisobutyldiméthoxysilane, diisobutyldiéthoxysilane, isobutylisopropyldimethoxysilane, di-n-butyldiméthoxysilane, cyclopentyltriméthoxysilane, isopropyltriméthoxysilane, n-propyltriméthoxysilane, n-propyltriéthoxysilane, éthyltriéthoxysilane, tétraméthoxysilne, tétraéthoxysilane, diéthylaminotriéthoxysilane, cyclopentylpyrrolidinodiméthoxysilane, bis(pyrrolidino)diméthoxysilane, bis(perhydroisoquinolino)diméthoxysilane, et diméthyldiméthoxysilane.

11. Procédé selon la revendication 1, dans lequel le système donneur d'électrons mixte est choisi dans le groupe constitué par dicyclopentyldiméthoxysilane et myristate d'isopropyle ; diisopropyldiméthoxysilane et myristate d'isopropyle ; dicyclopentyldiméthoxysilane et laurate de poly(éthylèneglycol) ; dicyclopentyldiméthoxysilane, myristate d'isopropyle et dioléate de poly (éthylèneglycol) ; méthylcyclohexyldiméthoxysilane et myristate d'isopropyle ; n-propyltriméthoxysilane et myristate d'isopropyle ; diméthyldiméthoxysilane, méthylcyclohexyldiméthoxysilane et myristate d'isopropyle; dicyclopentyldiméthoxysilane et n-propyltriéthoxysilane et myristate d'isopropyle ; diisopropyldiméthoxysilane, n-propyltriéthoxysilane et myristate d'isopropyle ; dicyclopentyldiméthoxysilane, tétraéthoxysilane et myristate d'isopropyle ; dicyclopentyldiméthoxysilane, diisopropyldiméthoxysilane, n-propyltriéthoxysilane et myristate d'isopropyle ; et des combinaisons de ceux-ci.

12. Procédé selon la revendication 1, dans lequel le système donneur d'électrons mixte comprend trois donneurs d'électrons différents ou plus.

13. Procédé selon la revendication 1, dans lequel le système catalytique comprend un aluminium contenant un co-catalyseur, et dans lequel le rapport en moles de l'aluminium sur le donneur d'électrons mixte est dans la plage de 0,5 à 4,0:1.

14. Procédé suivant la revendication 1, dans lequel le réacteur en phase gazeuse est choisi dans le groupe comprenant :
(a) un réacteur à lit fluidisé;
(b) un réacteur ayant une vitesse de gaz superficielle dans la plage de 0,2 à 1 m/s ;
(c) un réacteur comportant un agitateur mécanique ou une raclette ; et
(d) des combinaisons de ceux-ci.

15. Procédé suivant la revendication 1, dans lequel le réacteur produit du polypropylène homopolymère ou du polypropylène copolymère aléatoire avec un ou plusieurs comonomères.
